# EUROPEAN PATENT APPLICATION

(11) **EP 3 576 189 A1**
(43) Date of publication of application: **04.12.2019**
(21) Application number: 19175281.5
(22) Date of filing: 20.05.2019
(51) Int. Cl.: H01M 4/131, H01M 4/36, H01M 4/525, H01M 10/0525, H01M 10/0567

(54) **NONAQUEOUS ELECTROLYTE SECONDARY BATTERY**

(30) Priority: 01.06.2018 JP 2018106015
(71) Applicant: TOYOTA JIDOSHA KABUSHIKI KAISHA, Toyota-Shi, Aichi-Ken 471-8571 (JP)
(72) Inventor: KATO, Masaki, Toyota-shi, Aichi-ken,, 471-8571 (JP); TAKAHATA, Koji, Toyota-shi, Aichi-ken,, 471-8571 (JP)
(74) Representative: Winter, Brandl, Fürniss, Hübner, Röss, Kaiser, Polte - Partnerschaft mbB

(57) **Abstract**

Provided is a nonaqueous electrolyte secondary battery in which lithium fluorosulfonate is added to the nonaqueous electrolyte solution and which exhibits excellent low-temperature input characteristics after long-term storage at high temperatures. The nonaqueous electrolyte secondary battery disclosed herein includes a positive electrode, a negative electrode, and a nonaqueous electrolyte solution. The positive electrode is provided with a positive electrode active material layer. This positive electrode active material layer contains trilithium phosphate and, as a positive electrode active material, a lithium transition metal composite oxide that contains at least lithium, nickel, manganese, and cobalt. The negative electrode has a coating film on its surface. The nonaqueous electrolyte solution contains lithium fluorosulfonate. The mass proportion of the trilithium phosphate with reference to the positive electrode active material is not less than 0.9 mass% and not more than 4.25 mass%. The content of the lithium fluorosulfonate in the nonaqueous electrolyte solution is not less than 0.135 mass% and not more than 0.850 mass%.

## Description

### BACKGROUND OF THE INVENTION

### 1. Field of the Invention

The present invention relates to a nonaqueous electrolyte secondary battery. This application claims the benefit of foreign priority to Japanese Patent Application No. 2018-106015 filed on June 1, 2018, which is incorporated by reference in its entirety.

### 2. Description of the Related Art

Nonaqueous electrolyte secondary batteries, e.g., lithium ion secondary batteries and so forth, are being advantageously used for, e.g., portable power sources such as for personal computers and mobile devices, and vehicle-drive power sources such as for electric automobiles (EV), hybrid automobiles (HV), and plug-in hybrid automobiles (PHV).

Additional increases in performance have been desired of nonaqueous electrolyte secondary batteries as they have become more widespread. The addition of lithium fluorosulfonate to nonaqueous electrolyte solutions for improving characteristics of a nonaqueous electrolyte secondary battery is known art (refer, for example, to Japanese Patent Application Laid-open No. 2011-187440).

### SUMMARY OF THE INVENTION

However, as a result of intensive investigations, the present inventors found a problem with the art described in Japanese Patent Application Laid-open No. 2011-187440, i.e., the low-temperature input characteristics are reduced when the nonaqueous electrolyte secondary battery is subjected to long-term storage at elevated temperatures.

An object of the present disclosure is therefore to provide a nonaqueous electrolyte secondary battery in which lithium fluorosulfonate is added to the nonaqueous electrolyte solution and which exhibits excellent low-temperature input characteristics after long-term storage at high temperatures.

The present inventors focused on the coating film that forms on the surface of the negative electrode in nonaqueous electrolyte secondary batteries that includes lithium fluorosulfonate added to the nonaqueous electrolyte solution. This coating film is formed due to the activation treatment that is carried out after a nonaqueous electrolyte secondary battery has been assembled, and can deteriorate, separate (peel), grow, and so forth during use and during long-term storage. As a result of intensive investigations, the present inventors found that excellent low-temperature input characteristics are obtained after the long-term high-temperature storage of a nonaqueous electrolyte secondary battery, when trilithium phosphate is incorporated in the positive electrode active material layer as a component for improving the coating film and, after coating film formation, the trilithium phosphate is present in a prescribed amount in the positive electrode active material layer and the lithium fluorosulfonate is present in a prescribed amount in the nonaqueous electrolyte solution. The present disclosure was achieved as a consequence.

The herein disclosed nonaqueous electrolyte secondary battery includes a positive electrode, a negative electrode, and a nonaqueous electrolyte solution. The positive electrode is provided with a positive electrode active material layer. This positive electrode active material layer contains trilithium phosphate and, as a positive electrode active material, a lithium transition metal composite oxide that contains at least lithium, nickel, manganese, and cobalt. The negative electrode has a coating film on its surface. The nonaqueous electrolyte solution contains lithium fluorosulfonate. The mass proportion of the trilithium phosphate relative to the positive electrode active material is not less than 0.9 mass% and not more than 4.25 mass%. The content of the lithium fluorosulfonate in the nonaqueous electrolyte solution is not less than 0.135 mass% and not more than 0.850 mass%.

In accordance with this constitution, a nonaqueous electrolyte secondary battery is provided that exhibits excellent low-temperature output characteristics after long-term high-temperature storage.

In a desired aspect of the herein disclosed nonaqueous electrolyte secondary battery, the nickel content in the lithium transition metal composite oxide with reference to the total content therein of nickel, manganese, and cobalt is at least 34 mol%.

In accordance with this constitution, the resistance of the nonaqueous electrolyte secondary battery is lowered and its capacity is increased.

In a desired aspect of the herein disclosed nonaqueous electrolyte secondary battery, the trilithium phosphate is a particulate having an average particle diameter of not more than 10 µm.

In accordance with this constitution, a uniform decomposition of the trilithium phosphate is facilitated during coating film formation; the coating film that is formed exhibits an increased density and compactness; and additional improvements in the low-temperature input characteristics of the nonaqueous electrolyte secondary battery after long-term high-temperature storage can be brought about.

In a desired aspect of the herein disclosed nonaqueous electrolyte secondary battery, the nonaqueous electrolyte solution additionally contains lithium bis(oxalato)borate.

In accordance with this constitution, the lithium bis(oxalato)borate promotes the decomposition reaction of the nonaqueous electrolyte solution and makes it possible to obtain a more uniform coating film and additional improvements in the low-temperature input characteristics of the nonaqueous electrolyte secondary battery after long-term high-temperature storage can be brought about.

In a more desired aspect, the content of the lithium bis(oxalato)borate in the nonaqueous electrolyte solution is at least 0.1 mass%.

In accordance with this constitution, the effect of the lithium bis(oxalato)borate on improving the coating film is brought to a higher level and greater improvements in the low-temperature input characteristics after long-term high-temperature storage can be brought about.

In an even more desired aspect, the content of the lithium bis(oxalato)borate in the nonaqueous electrolyte solution is at least 0.2 mass%.

In accordance with this constitution, the effect of the lithium bis(oxalato)borate on improving the coating film is brought to an even higher level and even greater improvements in the low-temperature input characteristics after long-term high-temperature storage can be brought about.

In a desired aspect of the herein disclosed nonaqueous electrolyte secondary battery, the nonaqueous electrolyte solution additionally contains lithium difluorophosphate.

According to this constitution, the ionic conductivity (in particular the conductivity of the ions that are the charge carriers) of the coating film can be further improved and additional improvements in the low-temperature input characteristics after long-term high-temperature storage of the nonaqueous electrolyte secondary battery can be brought about.

In a more desired aspect, the content of the lithium difluorophosphate in the nonaqueous electrolyte solution is at least 0.1 mass%.

In accordance with this constitution, the effect of the lithium difluorophosphate on improving the coating film is brought to a higher level and greater improvements in the low-temperature input characteristics after long-term high-temperature storage can be brought about.

In an even more desired aspect, the content of the lithium difluorophosphate in the nonaqueous electrolyte solution is at least 0.2 mass%.

In accordance with this constitution, the effect of the lithium difluorophosphate on improving the coating film is brought to an even higher level and even greater improvements in the low-temperature input characteristics after long-term high-temperature storage can be brought about.

### BRIEF DESCRIPTION OF DRAWINGS

FIG. 1 is a cross-sectional drawing that schematically illustrates the internal structure of a lithium ion secondary battery according to an embodiment of the present disclosure; and
FIG. 2 is a schematic drawing that illustrates the structure of the wound electrode assembly of a lithium ion secondary battery according to an embodiment of the present disclosure.

### DESCRIPTION OF THE PREFERRED EMBODIMENTS

Embodiments according to the present disclosure are described in the following with reference to the figures. Matters required for the execution of the present disclosure but not particularly described in this Specification (for example, the general constitution of a nonaqueous electrolyte secondary battery and production process therefor that are not characteristic features of the present disclosure) can be understood as design matters for the person skilled in the art based on the conventional art in the pertinent field. The present disclosure can be implemented based on the contents disclosed in this Specification and the common general technical knowledge in the pertinent field. In the figures referenced in the following, members and positions that exercise the same function are assigned the same reference sign in the description. The dimensional relationships (length, width, thickness, and so forth) in the individual figures do not reflect actual dimensional relationships.

The "secondary battery" in this Specification refers generally to a power storage device capable of repeated charge/discharge and is a term that encompasses so-called storage batteries as well as storage devices such as electrical double-layer capacitors and so forth.

A "nonaqueous electrolyte secondary battery" refers to a battery that is provided with a nonaqueous electrolyte solution (a nonaqueous electrolyte solution typically contains a supporting electrolyte in a nonaqueous solvent).

The present disclosure is described in detail in the following using as an example a flat rectangular lithium ion secondary battery having a flat wound electrode assembly and a flat battery case. Note that the various embodiments described herein are by way of example only and are not intended to limit the scope of the disclosure.

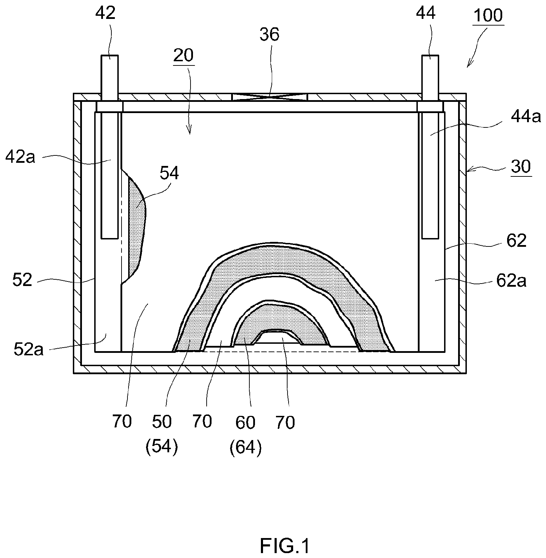

The lithium ion secondary battery 100 shown in FIG. 1 is a sealed battery fabricated by housing a flat wound electrode assembly 20 and a nonaqueous electrolyte solution (not shown) in a flat rectangular battery case (i.e., an outer container) 30. The following are disposed in the battery case 30: a positive electrode terminal 42 and a negative electrode terminal 44 for making external connections, and a thin-walled safety valve 36 disposed so as to release the internal pressure when the internal pressure in the battery case 30 rises up to or over a prescribed level. A fill port (not shown) for introducing the nonaqueous electrolyte solution is also disposed in the battery case 30. The positive electrode terminal 42 is electrically connected to a positive electrode current collector plate 42a. The negative electrode terminal 44 is electrically connected to a negative electrode current collector plate 44a. For example, a lightweight metal material having a good thermal conductivity, e.g., aluminum, is used as the material of the battery case 30.

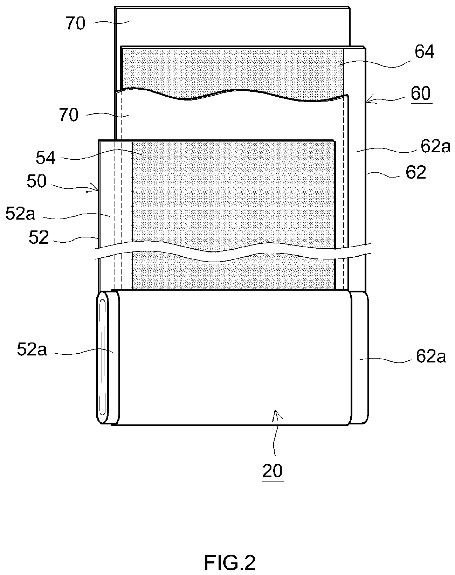

As shown in FIGS. 1 and 2, the wound electrode assembly 20 has a configuration in which a positive electrode sheet 50 and a negative electrode sheet 60 are laminated and wound in the length direction with two long strip-shaped separator sheets 70 interposed therebetween, wherein the positive electrode sheet 50 has a positive electrode active material layer 54 formed along the length direction on one side or both sides (both sides in this instance) of a long strip-shaped positive electrode current collector 52, and the negative electrode sheet 60 has a negative electrode active material layer 64 formed along the length direction on one side or both sides (both sides in this instance) of a long strip-shaped negative electrode current collector 62. The positive electrode current collector plate 42a and the negative electrode current collector plate 44a are connected to, respectively, a positive electrode active material layer-free region 52a (that is, a region where the positive electrode active material layer 54 is not formed and the positive electrode current collector 52 is thereby exposed) and a negative electrode active material layer-free region 62a (that is, a region where the negative electrode active material layer 64 is not formed and the negative electrode current collector 62 is thereby exposed), which are formed so as to extend to the outside from the two edges considered in the direction of the winding axis (that is, the sheet width direction perpendicular to the aforementioned length direction) of the wound electrode assembly 20.

The positive electrode current collector 52 constituting the positive electrode sheet 50 can be exemplified by aluminum foil and so forth.

The positive electrode active material layer 54 contains trilithium phosphate (Li₃PO₄). Trilithium phosphate is a component that participates in coating film formation at active material surfaces, and the phosphorus atom derived from trilithium phosphate is thought to be present in the coating film that is formed.

The trilithium phosphate is desirably a particulate having an average particle diameter of not more than 10 µm. This facilitates the uniform decomposition of the trilithium phosphate during coating film formation and can increase the density and compactness of the resulting coating film and can bring about further improvements in the low-temperature input characteristics after the long-term high-temperature storage of the lithium ion secondary battery 100. On the other hand, viewed from the standpoint of preventing excessive decomposition of the trilithium phosphate due to a large specific surface area, the trilithium phosphate is desirably a particulate having an average particle diameter of at least 1 µm.

The average particle diameter of the trilithium phosphate can be measured, for example, as the value of the 50% cumulative particle diameter (D50) considered from the microfine particle side in the cumulative particle size distribution curve obtained by laser diffraction/scattering using N-methylpyrrolidone as solvent.

The positive electrode active material layer 54 contains, as a positive electrode active material, a lithium transition metal composite oxide containing at least lithium, nickel, manganese, and cobalt. That is, a lithium nickel manganese cobalt composite oxide is used as a positive electrode active material in this embodiment. This lithium nickel manganese cobalt composite oxide desirably has a layered rock salt structure.

There are no particular limitations for this lithium nickel manganese cobalt composite oxide on the nickel content with reference to the total content of the nickel, manganese, and cobalt, but at least 34 mol% is desired. This supports a reduction in the resistance of the lithium ion secondary battery 100 and an increase in its capacity. The nickel content with reference to the total content of the nickel, manganese, and cobalt is desirably not more than 60 mol% from the standpoint of not causing a reduction in the performances as a positive electrode active material of the lithium nickel manganese cobalt composite oxide.

The lithium nickel manganese cobalt composite oxide may contain an additional metal element (for example, Zr, Mo, W, Mg, Ca, Na, Fe, Cr, Zn, Si, Sn, Al, and so forth) besides the lithium, nickel, manganese, and cobalt.

A lithium nickel manganese cobalt composite oxide represented by the following formula (I) can be advantageously used as the positive electrode active material.

LiₐNiₓMn_{y}Co_{z}O₂ (I)

Here, a satisfies 0.98 ≤ a ≤ 1.20. x, y, and z satisfy x + y + z = 1. x desirably satisfies 0.20 ≤ x ≤ 0.60 and more desirably satisfies 0.34 ≤ x ≤ 0.60. y desirably satisfies 0 < y ≤ 0.50 and more desirably satisfies 0 < y ≤ 0.40. z desirably satisfies 0 < z ≤ 0.50 and more desirably satisfies 0 < z ≤ 0.40.

The positive electrode active material layer 54 may additionally contain, within a range that does not impair the effects of the present disclosure, a positive electrode active material other than the lithium nickel manganese cobalt composite oxide.

The content of the positive electrode active material in the positive electrode active material layer 54 (that is, with reference to the total mass of the positive electrode active material layer 54) is desirably at least 70 mass% and more desirably at least 75 mass%.

The mass proportion of the trilithium phosphate relative to the positive electrode active material is not less than 0.9 mass% and not more than 4.25 mass% in this embodiment.

The low-temperature input characteristics after long-term high-temperature storage are reduced when the mass proportion of the trilithium phosphate relative to the positive electrode active material is less than 0.9 mass%. This is thought to occur because the organic component in the coating film is increased and the effect due to the trilithium phosphate with regard to improving the coating film is then not obtained to a satisfactory degree. The low-temperature input characteristics after long-term high-temperature storage are reduced when the mass proportion of the trilithium phosphate relative to the positive electrode active material exceeds 4.25 mass%. This is thought to occur because the phosphorus content in the coating film formed on the surface of the negative electrode active material is then excessive and local growth of the inorganic component in the coating film occurs and the dense and compact character of the coating film is reduced.

The mass proportion of the trilithium phosphate relative to the positive electrode active material is desirably not less than 1 mass% and not more than 3.5 mass% and is more desirably not less than 1.25 mass% and not more than 2.5 mass%.

The positive electrode active material layer 54 may contain components other than trilithium phosphate and the positive electrode active material. Examples of these components are conductive materials, binders, and so forth.

Carbon black, e.g., acetylene black (AB), as well as other carbon materials (e.g., graphite) can be favorably used as the conductive material. The content of the conductive material in the positive electrode active material layer 54 is desirably not less than 1 mass% and not more than 15 mass% and is more desirably not less than 3 mass% and not more than 12 mass%.

For example, polyvinylidene fluoride (PVdF) and so forth can be used as the binder. The content of the binder in the positive electrode active material layer 54 is desirably not less than 1 mass% and not more than 15 mass% and is more desirably not less than 2 mass% and not more than 12 mass%.

The negative electrode current collector 62 constituting the negative electrode sheet 60 can be exemplified by copper foil and so forth. For example, a carbon material such as graphite, hard carbon, soft carbon, and so forth may be used as the negative electrode active material contained in the negative electrode active material layer 64. The graphite may be a natural graphite or an artificial graphite and may be an amorphous carbon-coated graphite in which graphite is coated with an amorphous carbon material. The negative electrode active material layer 64 may contain components other than the active material, for example, a binder, thickener, and so forth. For example, a styrene-butadiene rubber (SBR) may be used as the binder. For example, carboxymethyl cellulose (CMC) may be used as the thickener.

The content of the negative electrode active material in the negative electrode active material layer is desirably at least 90 mass% and is more desirably not less than 95 mass% and not more than 99 mass%. The content of the binder in the negative electrode active material layer is desirably not less than 0.1 mass% and not more than 8 mass% and is more desirably not less than 0.5 mass% and not more than 3 mass%. The content of the thickener in the negative electrode active material layer is desirably not less than 0.3 mass% and not more than 3 mass% and is more desirably not less than 0.5 mass% and not more than 2 mass%.

The negative electrode 60 has a coating film on its surface (particularly the surface of the negative electrode active material). This coating film is a coating film that derives from the trilithium phosphate and the nonaqueous electrolyte solution. Accordingly, this coating film can contain the P atom derived from the trilithium phosphate and decomposition products of the nonaqueous electrolyte solution. This coating film is typically formed by the activation treatment.

The formation of the coating film on the surface of the negative electrode 60 can be confirmed, for example, by analysis using an electron beam microanalyzer (EPMA).

The separator 70 can be exemplified by a porous sheet (film) composed of a resin such as polyethylene (PE), polypropylene (PP), polyester, cellulose, polyamide, and so forth. This porous sheet may have a single-layer structure or may have a laminated structure of two or more layers (for example, a trilayer structure in which a PP layer is laminated on both sides of a PE layer). A heat-resistant layer (HRL) may be disposed on the surface of the separator 70.

The nonaqueous electrolyte solution contains lithium fluorosulfonate. Lithium fluorosulfonate is also a component that participates in the formation of coating films on active material surfaces.

The nonaqueous electrolyte solution typically contains a nonaqueous solvent and a supporting electrolyte.

The organic solvents, e.g., the various carbonates, ethers, esters, nitriles, sulfones, lactones, and so forth, that are used in the electrolyte solutions of ordinary lithium ion secondary batteries can be used without particular limitation as the nonaqueous solvent. The following are specific examples: ethylene carbonate (EC), propylene carbonate (PC), diethyl carbonate (DEC), dimethyl carbonate (DMC), ethyl methyl carbonate (EMC), monofluoroethylene carbonate (MFEC), difluoroethylene carbonate (DFEC), monofluoromethyl difluoromethyl carbonate (F-DMC), and trifluorodimethyl carbonate (TFDMC). A single such nonaqueous solvent may be used by itself or a suitable combination of two or more may be used.

Lithium salts such as LiPF₆, LiBF₄, LiClO₄, and so forth (and particularly LiPF₆) can be used as the supporting electrolyte. The concentration of the supporting electrolyte is desirably not less than 0.7 mol/L and not more than 1.3 mol/L.

The content of the lithium fluorosulfonate in the nonaqueous electrolyte solution is not less than 0.135 mass% and not more than 0.85 mass%.

The low-temperature input characteristics after long-term high-temperature storage are reduced when the lithium fluorosulfonate content is less than 0.135 mass%. This is thought to occur because the amount of the coating film at the negative electrode active material surface is then deficient and the ionic conductivity is reduced. The low-temperature input characteristics after long-term high-temperature storage are also reduced when the lithium fluorosulfonate content is greater than 0.85 mass%. This is thought to be due to the generation of an excessively large amount of coating film, causing a reduction in the electronic conductivity.

The content of the lithium fluorosulfonate in the nonaqueous electrolyte solution is desirably not less than 0.2 mass% and not more than 0.7 mass% and is more desirably not less than 0.3 mass% and not more than 0.55 mass%.

The nonaqueous electrolyte solution desirably additionally contains lithium bis(oxalato)borate. In this case, the lithium bis(oxalato)borate promotes the decomposition reactions of the nonaqueous electrolyte solution and enables the generation of a more uniform coating film and the low-temperature input characteristics of the lithium ion secondary battery 100 after long-term high-temperature storage are then further improved. The content of the lithium bis(oxalato)borate in the nonaqueous electrolyte solution is desirably at least 0.1 mass% and more desirably at least 0.2 mass% because this provides a high coating film improvement effect from the lithium bis(oxalato)borate and provides additional improvements in the low-temperature input characteristics of the lithium ion secondary battery 100 after long-term high-temperature storage. When, on the other hand, the content of the lithium bis(oxalato)borate is excessively high, the amount of coating film formation may be then too large and this may cause an increase in resistance. The content of lithium bis(oxalato)borate in the nonaqueous electrolyte solution is therefore desirably not more than 1.0 mass%.

The nonaqueous electrolyte solution desirably additionally contains lithium difluorophosphate. In this case, the ionic conductivity of the coating film (particularly the conductivity for the ion (for example, Li) that functions as the charge carrier) can be improved and additional improvements can be brought about in the low-temperature input characteristics of the lithium ion secondary battery 100 after long-term high-temperature storage. The content of the lithium difluorophosphate in the nonaqueous electrolyte solution is desirably at least 0.1 mass% and more desirably at least 0.2 mass% because this provides a high coating film improvement effect from the lithium difluorophosphate and provides additional improvements in the low-temperature input characteristics of the lithium ion secondary battery 100 after long-term high-temperature storage. When, on the other hand, the content of the lithium difluorophosphate is excessively high, the amount of coating film formation may be then too large and this may cause an increase in resistance. The content of lithium difluorophosphate in the nonaqueous electrolyte solution is therefore desirably not more than 1.0 mass%.

The nonaqueous electrolyte solution may contain-insofar as the effects of the present disclosure are not significantly impaired-components other than the components described in the preceding, for example, various additives such as thickeners and gas generators such as biphenyl (BP) and cyclohexylbenzene (CHB).

An advantageous method for producing the lithium ion secondary battery 100 is described in the following, but the method for producing the lithium ion secondary battery 100 is not limited to or by this.

A step of fabricating a lithium ion secondary battery assembly is carried out first.

Specifically, a positive electrode 50 having a positive electrode active material layer 54 formed on a positive electrode current collector 52 is prepared. The positive electrode 50 can be fabricated by conventional methods. However, the positive electrode active material layer 54 is allowed to contain trilithium phosphate and, as a positive electrode active material, the lithium transition metal composite oxide containing at least lithium, nickel, manganese, and cobalt. Here, the mass proportion of the trilithium phosphate relative to the positive electrode active material is set to not less than 1 mass% and not more than 5 mass%.

A negative electrode 60 having a negative electrode active material layer 64 formed on a negative electrode current collector 62 is prepared. The negative electrode 60 can be prepared according to conventional methods.

A separator 70 is prepared. The separator 70 can be fabricated by conventional methods. It may also be available as a commercial product.

A wound electrode assembly 20 is fabricated by laminating the positive electrode and negative electrode while interposing the separator 70 therebetween and winding the resulting laminate.

On the other hand, a nonaqueous electrolyte solution containing lithium fluorosulfonate is prepared. The nonaqueous electrolyte solution can be prepared by dissolving the supporting electrolyte and lithium fluorosulfonate in a nonaqueous solvent. Here, the content of the lithium fluorosulfonate in the nonaqueous electrolyte solution is set to not less than 0.15 mass% and not more than 1.0 mass%.

The wound electrode assembly 20 is allowed to be housed in a battery case 30 and the nonaqueous electrolyte solution is filled into the battery case through the fill port in the battery case 30. The fill port is then sealed.

A lithium ion secondary battery assembly is obtained proceeding as described above.

A step of activating the lithium ion secondary battery assembly is then carried out.

Specifically, a conditioning treatment and an ageing treatment are carried out on the lithium ion secondary battery assembly for the purpose of activation.

In the conditioning treatment, the lithium ion secondary battery assembly is subjected to an initial charging at a current value of 0.1 C to 10 C.

In the ageing treatment, the conditioned lithium ion secondary battery assembly is held for 20 ± 15 hours in a temperature environment of 60 ± 10°C.

A coating film is formed on the surface of the negative electrode 60 by performing these treatments. The lithium ion secondary battery 100 can be readily obtained by performing the conditioning treatment and the ageing treatment under the aforementioned conditions on a lithium ion secondary battery assembly in which the mass proportion of trilithium phosphate relative to the positive electrode active material is set to not less than 1 mass% and not more than 5 mass% and the content of lithium fluorosulfonate in the nonaqueous electrolyte solution is set to not less than 0.15 mass% and not more than 1.0 mass%. That is, by performing the conditioning treatment and ageing treatment under the aforementioned conditions, the trilithium phosphate is readily allowed to remain in the positive electrode active material at not less than 0.9 mass% and not more than 4.25 mass% with reference to the positive electrode active material and the lithium fluorosulfonate is readily allowed to remain in the nonaqueous electrolyte solution at not less than 0.135 mass% and not more than 0.850 mass%.

The lithium ion secondary battery 100 constructed proceeding as described above offers the advantage of having excellent low-temperature input characteristics after long-term storage at high temperatures. The reasons for this are presumed to be as follows.

The coating film on the surface of the negative electrode 60 is formed by the activation treatment during production and can undergo deterioration, separation (peeling), growth, and so forth during use as well as during long-term storage. In the present embodiment, a coating film is formed on the surface of the negative electrode 60; trilithium phosphate is allowed to be present in a prescribed amount in the positive electrode active material layer 54; and lithium fluorosulfonate is allowed to be present in a prescribed amount in the nonaqueous electrolyte solution. As a result, it is thought that, when the lithium ion secondary battery 100 is subjected to long-term strage at high temperatures, the coating film is repaired even when it has undergone deterioration and is reformed even when a portion of the coating film has peeled and separated, and as a consequence the coating film on the surface of the negative electrode 60 can be maintained in a state favorable for the low-temperature input characteristics.

The lithium ion secondary battery 100 constructed as described in the preceding can be used in a variety of applications. An advantageous application is as a drive power source mounted in a vehicle, e.g., an electric automobile (EV), hybrid automobile (HV), plug-in hybrid automobile (PHV), and so forth. The lithium ion secondary battery 100 may also be used in the form of a battery pack as typically provided by connecting a plurality thereof in series and/or parallel.

A rectangular lithium ion secondary battery 100 provided with a flat wound electrode assembly 20 has been described as an example. However, the herein disclosed nonaqueous electrolyte secondary battery may also be constructed as a lithium ion secondary battery provided with a stacked-type electrode assembly. The herein disclosed nonaqueous electrolyte secondary battery may also be constructed as a cylindrical lithium ion secondary battery. The herein disclosed nonaqueous electrolyte secondary battery may also be constructed as a nonaqueous electrolyte secondary battery other than a lithium ion secondary battery.

Examples in accordance with the present disclosure are described below, but this is not intended to limit the present disclosure to the description in these examples.

Fabrication of Lithium Ion Secondary Batteries for Evaluation A1 to A5 and B1 to B5

LiNi_{0.34}Co_{0.33}Mn_{0.33}O₂ (LNCM) having a layered rock salt structure as the positive electrode active material, trilithium phosphate (Li₃PO₄) having the average particle diameter shown in Table 1, acetylene black (AB) as a conductive material, and polyvinylidene fluoride (PVdF) as binder were mixed with N-methyl-2-pyrrolidone (NMP) at a mass ratio of LNCM : Li₃PO₄ : AB : PVdF = 100 : n : 13 : 13 to prepare a paste for forming a positive electrode active material layer. This paste was coated on aluminum foil and dried to form a positive electrode active material layer. A pressing treatment was then performed to fabricate a positive electrode sheet. A trilithium phosphate with an average particle diameter of 11 µm was used for battery A2, while a trilithium phosphate with an average particle diameter of 10 µm was used for batteries A1, A3 to A5, and B1 to B4. The mass ratio n for the trilithium phosphate was 1 for batteries A1 and A3, 5 for batteries A2 and A4, 2 for battery A5, 0.5 for batteries B1 and B2, 6 for batteries B3 and B4, and 0 (i.e., trilithium phosphate was not added) for battery B5.

Natural graphite (C) as the negative electrode active material, styrene-butadiene rubber (SBR) as a binder, and carboxymethyl cellulose (CMC) as a thickener were mixed at a mass ratio of C : SBR : CMC = 98 : 1 : 1 with deionized water to prepare a paste for forming a negative electrode active material layer. This paste was coated on copper foil and dried and was thereafter pressed to fabricate a negative electrode sheet.

A porous polyolefin sheet was prepared as the separator sheet.

A mixed solvent was prepared that contained ethylene carbonate (EC), ethyl methyl carbonate (EMC), and dimethyl carbonate (DMC) at a volume ratio of 1 : 1 : 1, into which LiPF₆ as supporting electrolyte was dissolved at a concentration of 1.0 mol/L. A nonaqueous electrolyte solution was prepared by the addition of lithium fluorosulfonate (LiFSO₃), lithium bis(oxalato)borate (LiBOB), and lithium difluorophosphate (LiPO₂F₂). The LiFSO₃ was added to provide a concentration in the nonaqueous electrolyte solution of 0.15 mass% for batteries A1 and A2, 1 mass% for batteries A3 and A4, 0.5 mass% for batteries A5 and B5, 1.1 mass% for batteries B1 and B3, and 0.1 mass% for batteries B2 and B4. The LiBOB was added to provide a concentration in the nonaqueous electrolyte solution of 0.1 mass% for batteries A2 and B5 and 0.2 mass% for the batteries other than A2 and B5. The LiPO₂F₂ was added to provide a concentration in the nonaqueous electrolyte solution of 0.1 mass% for batteries A2 and B5 and 0.2 mass% for the batteries other than A2 and B5.

The aforementioned positive electrode sheet, negative electrode sheet, and separator were laminated to fabricate an electrode assembly, and this electrode assembly was introduced along with the nonaqueous electrolyte solution into a battery case and the battery case was sealed.

This was subjected to a conditioning treatment in which initial charging was performed at a current value of 4 C. It was also subjected to an ageing treatment of holding for 20 hours in a temperature environment of 63°C. The lithium ion secondary batteries for evaluation A1 to A5 and B1 to B5 were obtained proceeding in this manner.

### Analysis of Lithium Ion Secondary Batteries for Evaluation

Each lithium ion secondary battery for evaluation was disassembled and a sample was taken from the negative electrode active material layer. Analysis of this using EPMA confirmed that a coating film had been formed on the surface of the negative electrode active material in all of the lithium ion secondary batteries for evaluation.

In addition, the mass proportion (mass%) of trilithium phosphate with reference to the positive electrode active material and the content (mass%) of lithium fluorosulfonate in the nonaqueous electrolyte solution were determined for each of the lithium ion secondary batteries for evaluation. The results are given in Table 1.

### Evaluation of Input Characteristics for Long-term High-temperature Storage

Each of the lithium ion secondary batteries for evaluation fabricated as described above was adjusted to a 75% SOC and was stored for 6 months in a 75°C environment. This was followed by adjustment of each of the lithium ion secondary batteries for evaluation to a 56% SOC in a -10°C environment; constant power charging at different power rates was performed; and the time (sec) required in each case for the battery voltage to reach 4.175 V was measured. The 10-second input was determined from the slope for the resulting first order-approximation straight line of the plot of the time required for charging (sec)-versus-power (W). Using 100 for a predetermined reference value of the 10-second input, the ratio was determined for the measured value of the 10-second input. The results are shown in Table 1.

### [Table 1]

**Table 1**

| Battery No. | LiFSO₃ (mass%) | Li₃PO₄ (mass%) | Low-temperature input |
|---|---|---|---|
| A1 | 0.135 | 0.90 | 135 |
| A2 | 0.135 | 4.25 | 123 |
| A3 | 0.850 | 0.90 | 139 |
| A4 | 0.850 | 4.25 | 117 |
| A5 | 0.435 | 1.74 | 162 |
| B1 | 0.880 | 0.48 | 83 |
| B2 | 0.095 | 0.48 | 79 |
| B3 | 0.880 | 4.80 | 91 |
| B4 | 0.095 | 4.80 | 72 |
| B5 | 0.435 | 0 | 74 |

These results demonstrate that-for a lithium ion secondary battery in which lithium fluorosulfonate has been added to the nonaqueous electrolyte solution-an excellent low-temperature input is obtained after long-term high-temperature storage when a coating film is formed on the surface of the negative electrode, the mass proportion of trilithium phosphate with reference to the positive electrode active material is not less than 0.9 mass% and not more than 4.25 mass% and the lithium fluorosulfonate content is not less than 0.135 mass% and not more than 0.850 mass%.

It is thus understood that the herein disclosed nonaqueous electrolyte secondary battery exhibits excellent low-temperature input characteristics after long-term high-temperature storage.

Specific examples of the present disclosure have been described in detail in the preceding, but these are nothing more than examples and do not limit the claims. The art disclosed in the claims includes various modifications and alterations to the specific examples provided as examples in the preceding.

## Claims

1. A nonaqueous electrolyte secondary battery comprising: a positive electrode, a negative electrode, and a nonaqueous electrolyte solution, wherein
the positive electrode is provided with a positive electrode active material layer;
the positive electrode active material layer includes trilithium phosphate and, as a positive electrode active material, a lithium transition metal composite oxide containing at least lithium, nickel, manganese, and cobalt;
the negative electrode has a coating film on its surface;
the nonaqueous electrolyte solution contains lithium fluorosulfonate;
the mass proportion of the trilithium phosphate with reference to the positive electrode active material is not less than 0.9 mass% and not more than 4.25 mass%; and
the content of the lithium fluorosulfonate in the nonaqueous electrolyte solution is not less than 0.135 mass% and not more than 0.850 mass%.

2. The nonaqueous electrolyte secondary battery according to claim 1, wherein the nickel content in the lithium transition metal composite oxide with reference to the total content therein of nickel, manganese, and cobalt is at least 34 mol%.

3. The nonaqueous electrolyte secondary battery according to claim 1 or 2, wherein the trilithium phosphate is a particulate having an average particle diameter of not more than 10 µm.

4. The nonaqueous electrolyte secondary battery according to any one of claims 1 to 3, wherein the nonaqueous electrolyte solution further comprises lithium bis(oxalato)borate.

5. The nonaqueous electrolyte secondary battery according to claim 4, wherein the content of the lithium bis(oxalato)borate in the nonaqueous electrolyte solution is at least 0.1 mass%.

6. The nonaqueous electrolyte secondary battery according to claim 4, wherein the content of the lithium bis(oxalato)borate in the nonaqueous electrolyte solution is at least 0.2 mass%.

7. The nonaqueous electrolyte secondary battery according to any one of claims 1 to 6, wherein the nonaqueous electrolyte solution further comprises lithium difluorophosphate.

8. The nonaqueous electrolyte secondary battery according to claim 7, wherein the content of the lithium difluorophosphate in the nonaqueous electrolyte solution is at least 0.1 mass%.

9. The nonaqueous electrolyte secondary battery according to claim 7, wherein the content of the lithium difluorophosphate in the nonaqueous electrolyte solution is at least 0.2 mass%.
